# EUROPEAN PATENT SPECIFICATION

(11) **EP 1 480 769 B1**
(45) Date of publication and mention of the grant of the patent: **13.12.2006**
(21) Application number: 03708333.4
(22) Date of filing: 06.03.2003
(51) Int. Cl.: B21J 1/00

(54) **A METHOD OF MANUFACTURE OF A METALLIC COMPONENT APPARATUS FOR USE IN THE METHOD AND METHOD OF FINISHING A METALLIC COMPONENT**
VERFAHREN UND VORRICHTUNG ZUR HERSTELLUNG EINES METALLISCHEN BAUTEILS UND VERFAHREN ZUR ENDBEARBEITUNG EINES METALLISCHEN BAUTEILS
PROCEDE DE FABRICATION D'UN COMPOSANT METALLIQUE, DISPOSITIF UTILISE POUR METTRE EN OEUVRE CE PROCEDE, ET PROCEDE DE FINITION D'UN COMPOSANT METALLIQUE

(30) Priority: 06.03.2002 GB 0205300; 20.03.2002 GB 0206619
(43) Date of publication of application: 01.12.2004
(73) Proprietor: Adcock Technology Limited, Loughborough, Leicestershire LE12 9NH (GB)
(72) Inventor: ADCOCK, Neil Walter, Ragdale, Leicestershire LE14 3PE (GB)
(74) Representative: Pluckrose, Anthony William
(86) International application number: PCT/GB2003/000929
(87) International publication number: WO 2003/074209

(56) References cited:
- EP-A- 0 704 263
- EP-A- 1 057 552
- EP-A- 1 219 367
- WO-A-01/71221
- WO-A-98/42460
- GB-A- 1 394 395
- GB-A- 2 034 612
- US-A- 2 306 233
- US-A- 2 609 710
- US-A- 3 445 904
- US-A- 3 662 462
- US-A- 5 878 491
- US-A- 6 032 550
- PATENT ABSTRACTS OF JAPAN vol. 014, no. 450 (M-1030), 27 September 1990 (1990-09-27) & JP 02 179336 A (MAZDA MOTOR CORP), 12 July 1990 (1990-07-12)
- PATENT ABSTRACTS OF JAPAN vol. 2000, no. 21, 3 August 2001 (2001-08-03) & JP 2001 105090 A (YOROZU CORP;MURAYAMA TEKKOSHO:KK), 17 April 2001 (2001-04-17)
- PATENT ABSTRACTS OF JAPAN vol. 017, no. 534 (M-1486), 27 September 1993 (1993-09-27) & JP 05 146841 A (TOYOTA MOTOR CORP), 15 June 1993 (1993-06-15)
- PATENT ABSTRACTS OF JAPAN vol. 1995, no. 07, 31 August 1995 (1995-08-31) & JP 07 100576 A (TOYOTA MOTOR CORP;OTHERS: 01), 18 April 1995 (1995-04-18)
- PATENT ABSTRACTS OF JAPAN vol. 0062, no. 49 (M-177), 8 December 1982 (1982-12-08) & JP 57 146444 A (HITACHI SEISAKUSHO KK), 9 September 1982 (1982-09-09)

## Description

The present invention relates to a method of manufacture of a metal component, to apparatus when used in the method and to a method of finishing a metallic component.

Casting is a good way of making metal components in large numbers. However, the tolerance levels achievable with casting processes are not always suitable for certain engineering products, for instance when axial alignment between apertures is crucial. Sometimes it is convenient to take a cast component and finish the process by machining the cast component. For example, US 6,598,655 discloses an engine block mould package, which has locator surfaces to help locate the engine block casting in subsequent aligning and machining operations. However, machining operations are generally costly and complex and the machining of a previously cast component removes much of the benefit of forming the component by casting in the first place.

US 3,445,904 describes a machine for casting and forging metal pieces in which the casting metal is caused to engage a support adjacent to the casting mould. After the cast piece has been separated from the mould, the support is used to carry it to a forging station to be forged and thereafter to a trimming station for the forged part to be separated from the trim part.

JP 05,146,841 discloses a method for finishing a cast component by forging. A core is arranged in a cavity to provide a through hole in the component, and the component is forged by a forging machine.

WO 98/42460 also discloses a method of casting followed by forging. In this case, a metal article is cast in a mould to form a preform blank, which is then subjected to extrusion, closed die forging, or both, to produce desired mechanical properties and microstructure.

The present invention provides a method of manufacture of metallic components comprising casting first and second metallic components each with a chosen shape and configuration; bringing the first and second metallic cast components into abutment with each other with the abutting components providing a first pair of aligned apertures;
characterised by inserting a first inner die tool through both of the first pair of aligned apertures; using exterior die tools to apply pressure, in the absence of external heating, on an external surface of each of the pair of cast components in order to deform the metal of the components and in order to simultaneously force a first interior surface part of each component against the previously inserted first inner die tool, whereby when the first and second components are deformed the shape and configuration of each first interior surface is set by the first inner die tool; and withdrawing the first inner die tool after the application of pressure has ceased.

In a second aspect the present invention provides a gearbox comprising a casing made from metal components cast, characterised by then being deformed in the manner described above.

In a third aspect, the present invention provides apparatus for use in the manufacture of metallic components using a method as described above, the apparatus comprising a first pair of aligned rams, one of which has extending forwardly from a front face thereof a cylindrical die spigot and a die blade and the other of which has a bore and a slot in a front face thereof to receive respectively the die spigot and the die blade; and a second pair of aligned rams, one of which has extending forwardly thereof a cylindrical die spigot and the other of which has a bore in a front face thereof to receive the die spigot; wherein the first pair of aligned rams are not aligned with the second pair of aligned rams; and the die blade has an aperture through which the cylindrical die spigot of the ram of the second pair of rams can extend in use of the apparatus.

In a fourth aspect the present invention provides a method of finishing first and second cast metallic components which in a finished product are attached to one another, the method being conducted prior to the attachment together of the components to form the finished product and the method comprising the steps of bringing together the first and second cast metallic components, each component having been previously cast with a desired shape and configuration, with the first and second metallic components providing a first pair of aligned apertures and a second pair of aligned apertures; characterised by inserting a first inner die spigot through the first pair of aligned apertures; inserting a second inner die spigot through the second pair of aligned apertures; and in the absence of external heating, using a ram to apply via external die tools a force on an external surface of each of the first and second components to deform the metal of the components whilst the previously inserted first inner die spigot ensures that the apertures of the first pair of aligned apertures remain aligned and the previously inserted second inner die spigot ensures that the apertures of the second pair of aligned apertures remain aligned; withdrawing the inner die spigots after deformation of the metal has ceased; and separating the first and second components to be attached to each other later in the assembly of the finished product.

In all of the above aspects the present invention provides for the manufacture of engineering of high tolerance engineering products from previously die cast metallic components. This enables quick and cost effective manufacturing.

The present invention will now be described by way of an example of a method of manufacture of a gearbox and by way of an example of apparatus used in the method, with reference to the accompanying drawings in which:
Figure 1 is a perspective view of a die cast metallic component;
Figure 2 is a perspective view of a pair of die cast metallic components, including the component of figure 1, assembled together;
Figure 3 is a cross-section through a gearbox having a casing formed from the assembled metallic components of figures 1 and 2;
Figure 4 is a perspective view of the exterior of the gearbox of figure 3;
Figure 5 shows the gearbox of figures 3 and 4 in use;
Figure 6 shows a cross-section through a part of the arrangement of figure 5;
Figures 7,8,9,10,11,12,13,14 and 15 show successive stages in a method of cold deformation used to convert e.g. the die cast metallic component of figure 1 into a component suitable to form part of the casing of the gearbox of figures 3 and 4;
Figure 16 shows a cross-section through apparatus used to manufacture a gear of the gearbox illustrated in figures 3 and 4;
Figure 17a and 17b illustrate a modification of the apparatus of Figure 16.

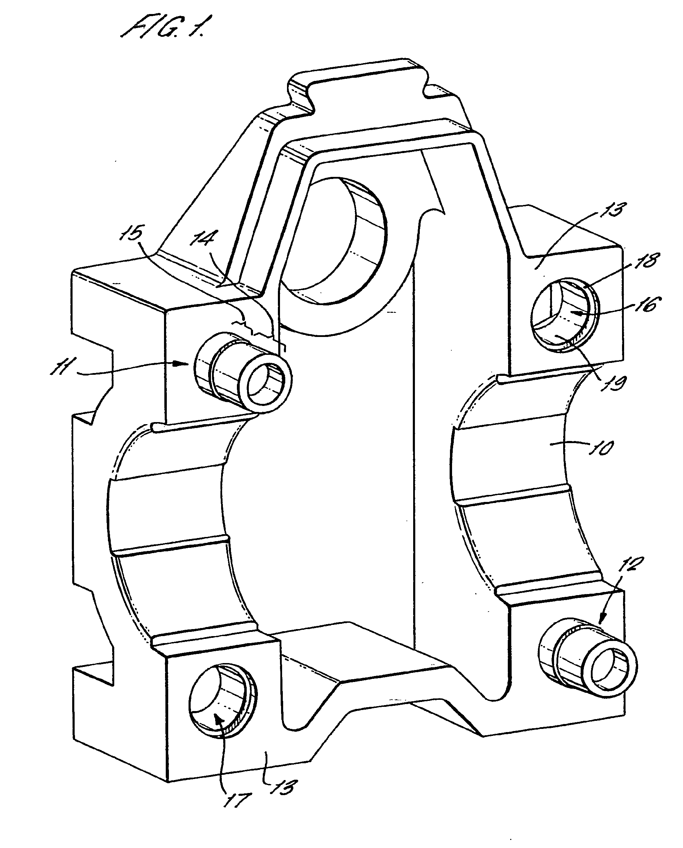

Turning first to figure 1 there can be seen in the figure a die cast metallic component 10 prior to deformation thereof in a method according to the present invention(as described below). The component has a two integral cylindrical spigots 11,12. The spigots 11,12 extend perpendicularly away from a planar face 13 of the component and each spigot e.g. 11 has an outermost portion 14 of a first diameter and a root portion 15 of a larger diameter. The spigots are designed to engage in two apertures in a mirror-image component. The component 10 has two cylindrical apertures 16 and 17 for receiving spigots of the mirror-image component. Each aperture e.g. 16 has a first portion 18 of a first diameter (which matches the diameter of a root portion of a spigot) and a second portion which is of a second smaller diameter (which matches the diameter of an outer portion of a spigot). The diameters of the portions of the apertures will be designed deliberately smaller than the diameters of the portions of the spigots so that the spigots must be deformed on insertion into the apertures and thereby form an interference fit.

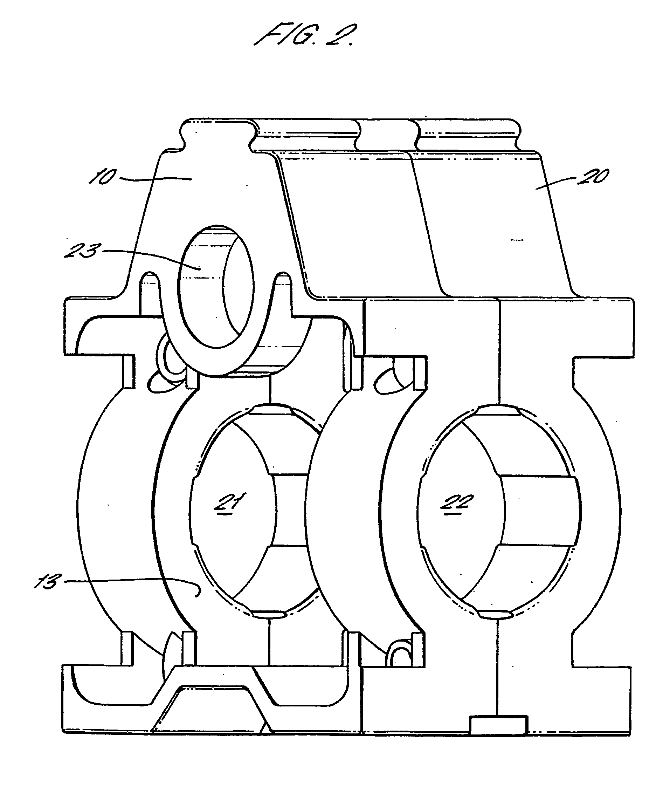

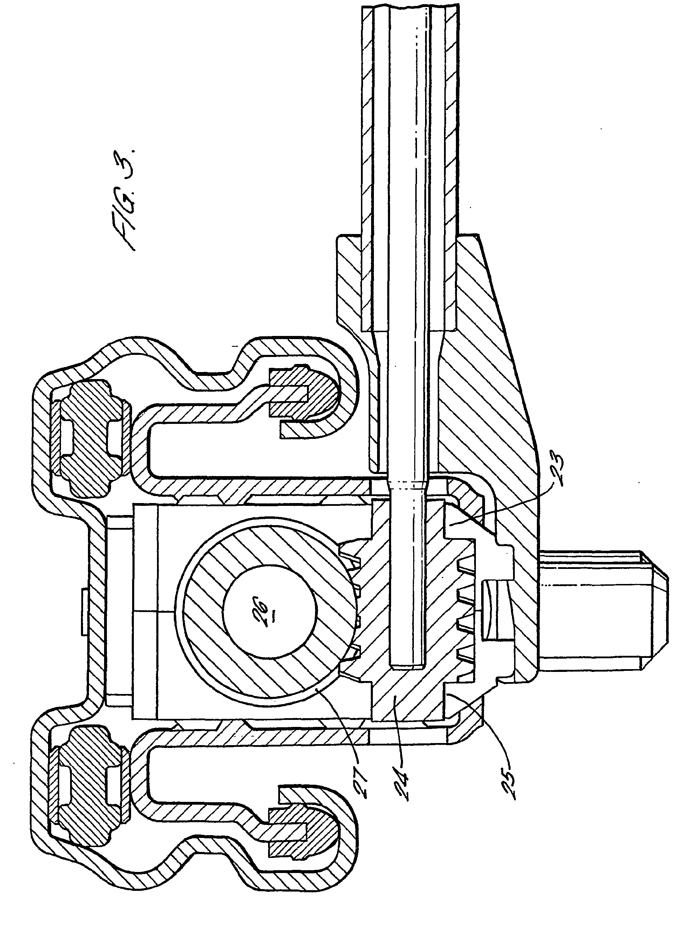

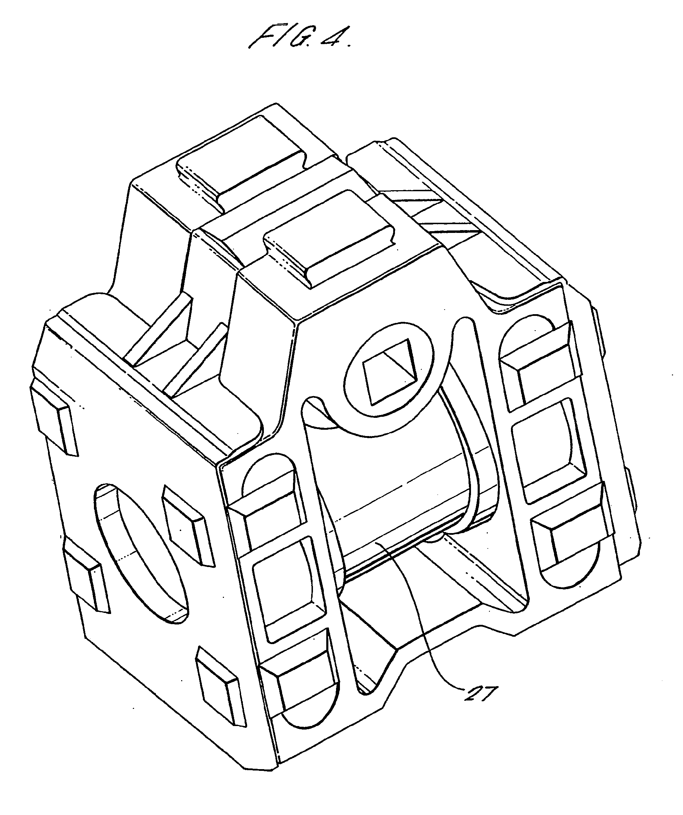

Figure 2 shows the component 10 engaged with a mirror-image component 20, the spigots of one engaged in the apertures of the other. It can be seen that together the components form two pairs of aligned apertures, a pair of apertures 21 and 22 aligned with each other and a pair of apertures comprising aperture 23 and an aligned aperture (not shown in figure 2, but indicated at 25 in figure 3). The purpose of these apertures in a gearbox 30 having a casing made from the components is seen in figure 3 where it can be seen that a worm gear 24 has ends journalled in the apertures 23 and 25. The worm gear 24 meshes with a rotating nut 27 the ends of which are journalled in the apertures 21,22. This is shown most clearly in figure 4. Thus the alignment with each other of the apertures of each pair of apertures is crucial.

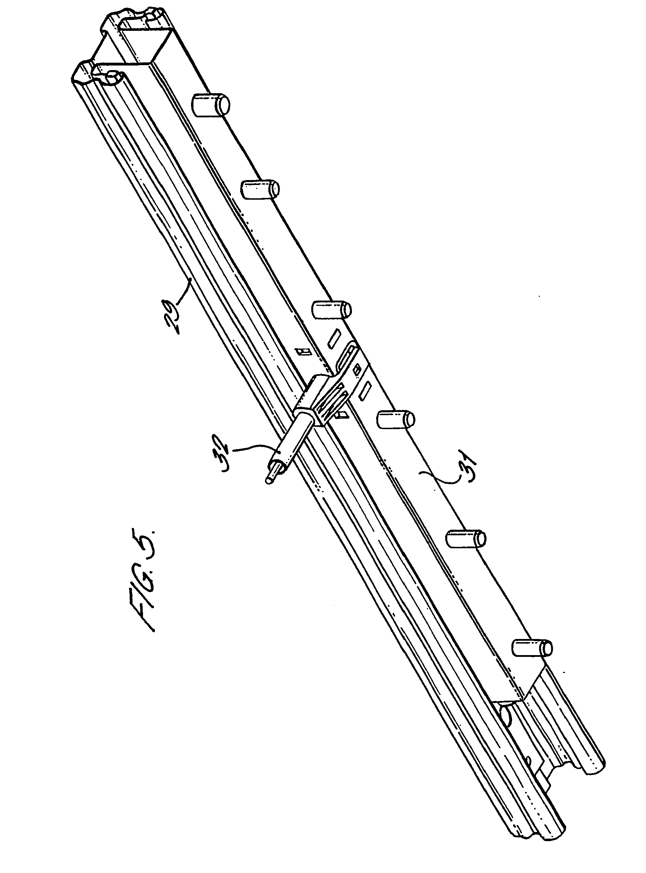

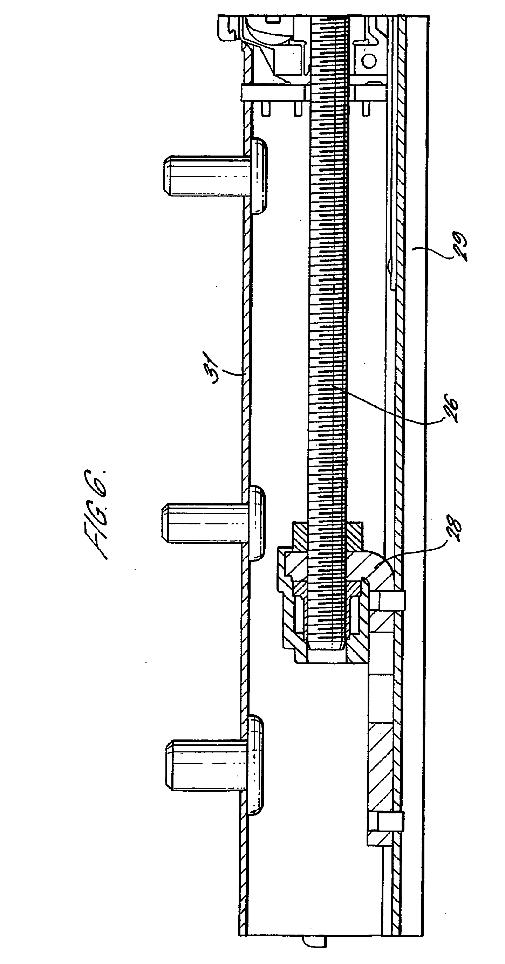

Figures 5 and 6 show the gearbox 30 in use. A lead screw 26 is fixed at each end by a bracket ,e.g the bracket 28 in figure 6, to a slider 29 slidably mounted on a fixed rail 31. The gearbox 30 is secured in a compartment in the rail, typically with an elastomeric shroud surrounding the gearbox 30 and securing the gearbox 30 in place in the compartment in the fixed rail 31 whilst allowing for some relative motion therebetween to allow for some adjustment of alignments. The fixed rail 31 will be secured to a floor of a passenger compartment of an automobile and a car seat will be secured to the slider 29. The lead screw passes through an aperture in the rotating nut 27 (see figure 3) and a screw thread on the exterior of the lead screw 26 engages a mating thread on the interior of the rotating nut 27. Rotation of the rotating nut causes linear motion of the lead screw and thereby sliding of the slider 29 and the seat mounted thereon. A flexible drive shaft 32 is shown in figure 5. This is connected at one end to an electric motor (not shown) and at the other end to the worm gear 24. Thus the worm gear 24 can be driven to rotate by the electric motor and thereby to drive the rotating nut 27 to rotate and the lead screw and the slider 31 to move linearly.

The die cast components e.g. 10 fresh from the die are not good enough in themselves to serve (without further treatment) as the parts of the casing of the gearbox 30. As mentioned above the alignment between the apertures needs to be precise. Also the inward facing surfaces of the apertures need to have a good surface finish to reduce friction between them and the components journalled in them. Furthermore the inwardly facing flat surfaces of the housing parts ,e.g. the surface 13 of the component 10, must act as reaction surfaces for end faces of the rotating nut and thus must be flat and regular and have a good surface finish. Furthermore there must be strict tolerance applied to the distance between the facing surfaces if the gearbox is to dispense with the need for spacers e.g washers interposed between the rotating nut and the reaction surfaces.

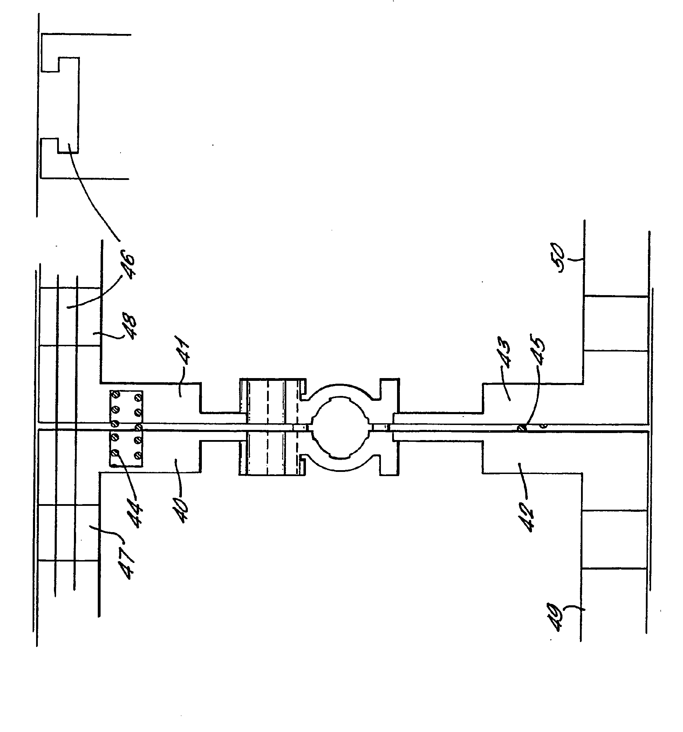

To achieve the necessary tolerances-and surface finishes a pair of matched die cast components such s 10 are put through a cold deformation process as will now be described with reference to figures 7 to 15. The use of the term 'cold deformation' indicates that the process takes place in the absence of external heating, although the deformation itself may generate some heat.

In figure 7 it can be seen that the two die cast components 10,20 are brought together to the point at which the root potions of the spigots just engage the perimeters of the matching apertures. The assembled components 10,20 are then engaged by two pairs of sprung blocks 40,41 and 42,43. Each pair of blocks has a spring 44,45 acting between them. Initially each the blocks of each pair are brought together under the action of a pair of hydraulic rams, either 47,48 or 49,50 and then the springs 44,45 force them apart to engage facing surfaces of the two components 10,20. The sprung blocks are mounted on rails e.g 46 and are slid along the rails by use of the hydraulic actuators to a working position in which they are engaged by latches. The hydraulic rams then force the sprung blocks together to release the components 10,20 and the sprung blocks are withdrawn along the rails to pick up a next pair of die cast components.

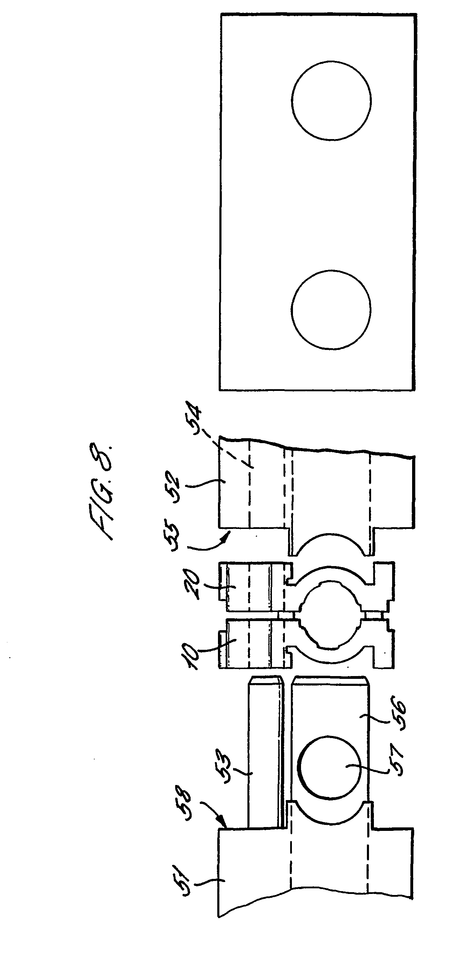

Next , as shown in figure 8, a pair of hydraulic rams 51,52 are brought together. The ram 51 has protruding therefrom a die spigot in the form of a cylindrical rod 53 which is advanced though the aligned apertures 23,25 of the components 10 and 20 and engages in a matching cylindrical bore 54 in an end face 55 of the ram 52. The ram 51 also has protruding therefrom a die blade in the form of a plate 56 which is advanced through the gap defined between those parts of the components 10,20 which together form the apertures 21,22. The plate 56 engages in a matching slot in the end face 55 of the ram 52. The plate 56 has an aperture 57 which aligns with the apertures 21,22 when the plate 56 is fully advanced. The end face 58 of the ram 51 has flat portions designed to engage flat end portions of the facing end surface of the component 10 and the ram 51 has arcuate portions designed to engage an arcuate portions of the facing end surface of the component 10. Similarly the end surface of the ram 52 has flat portions designed to engage flat end portions of the facing end surface of the component 20 and an arcuate portion designed to engage the arcuate facing end surface of the component 20. The plate 56 is a super finished die blade machined to a very close tolerance. The rod 53 is a super finished die spigot again machined to a very close tolerance.

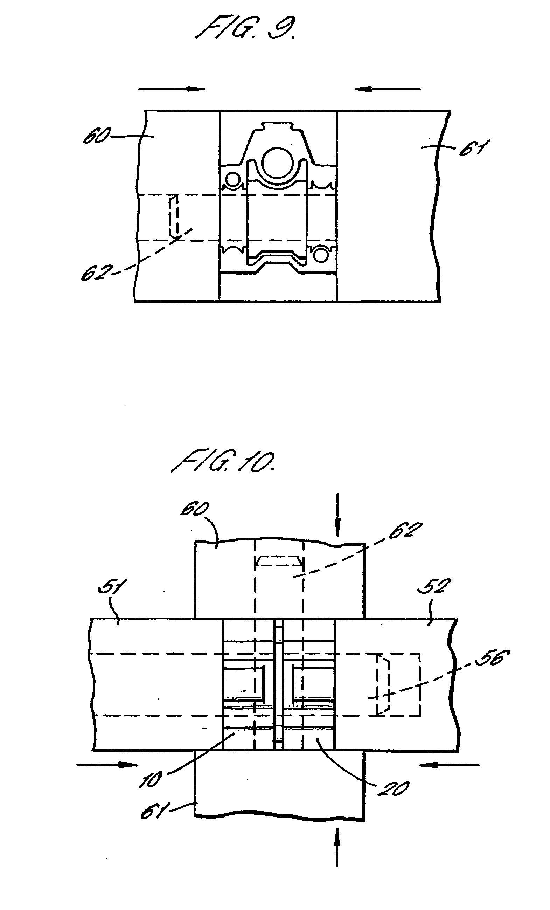

Figure 9 shows portions of two more hydraulic rams 60,61. The ram 61 has a die spigot in the form of a cylindrical rod 62 protruding therefrom. As the two rams 60,61 are brought together the rod 62 extends through the apertures 21 and 22 and also through the aperture 57 in the plate 56 previously inserted in the gap between the frames forming the apertures 21,22. The cylindrical rod 62 extends into a bore in an end surface of the ram 60. The rams 60,61 have flat end surfaces which engage the flat end surfaces of the components 10,20. The cylindrical rod 62 is a super finished die spigot machined to a close tolerance.

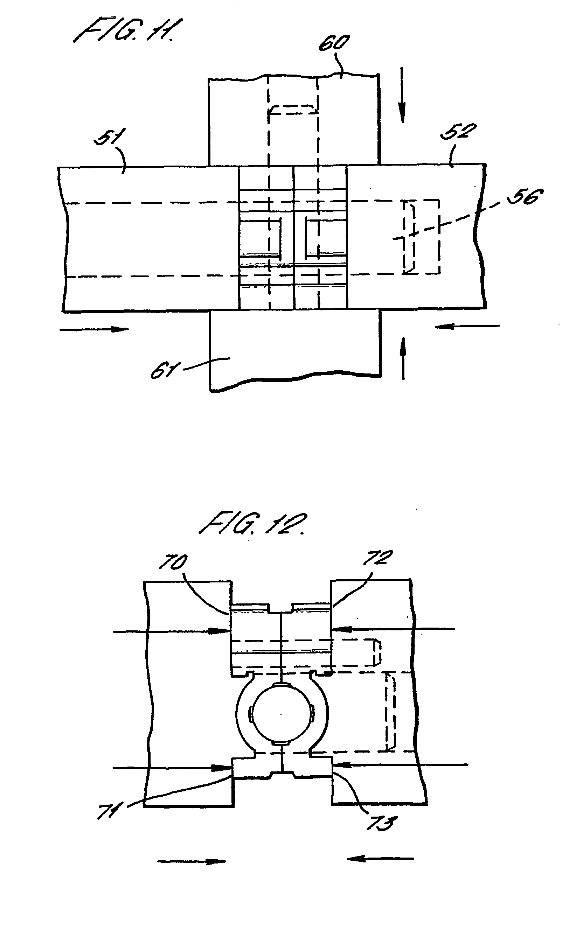

Figure 10 is a view from below showing how the two pairs of hydraulic rams 51,52 and 61,62 are used. The ram 51 is first pushed forward to the illustrated position, inserting the plate 56 (shown in figure 10) and the rod 53 (not shown in figure 10) through apertures in the assembled components 10,20. Then the ram 52 is brought forward into position abutting the component 20, with the plate 56 sliding into a slot in the end face of the ram 52 and the rod 53 into a bore. Then the ram 61 is advanced with the rod 62 passing through apertures in the assembled components 10,20 and the aperture 57 in the plate 56. Finally the ram 60 is advanced to engage the components 10,20 , with the rod 62 sliding into the bore in the end face of the ram 60.

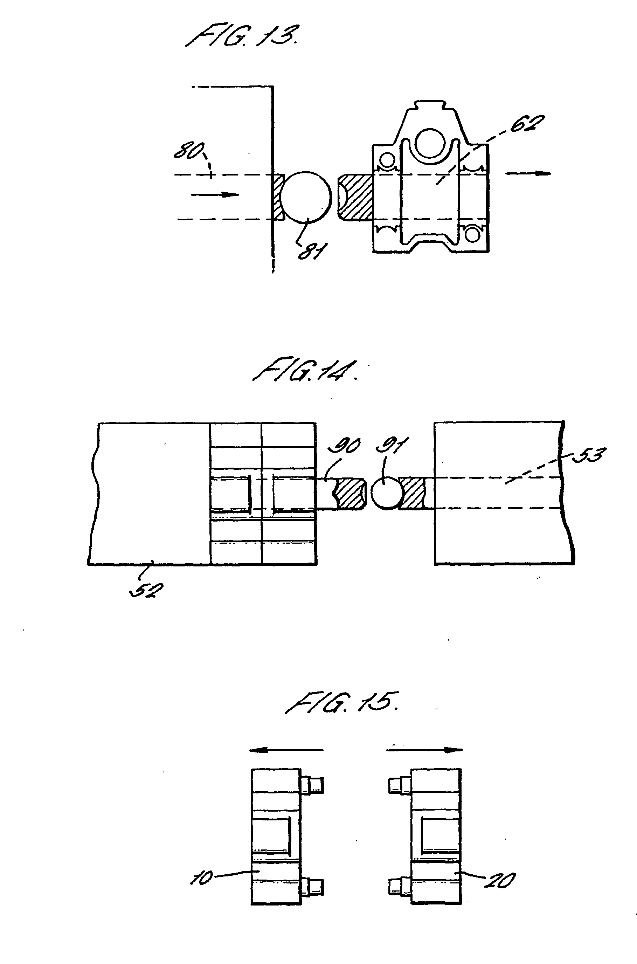

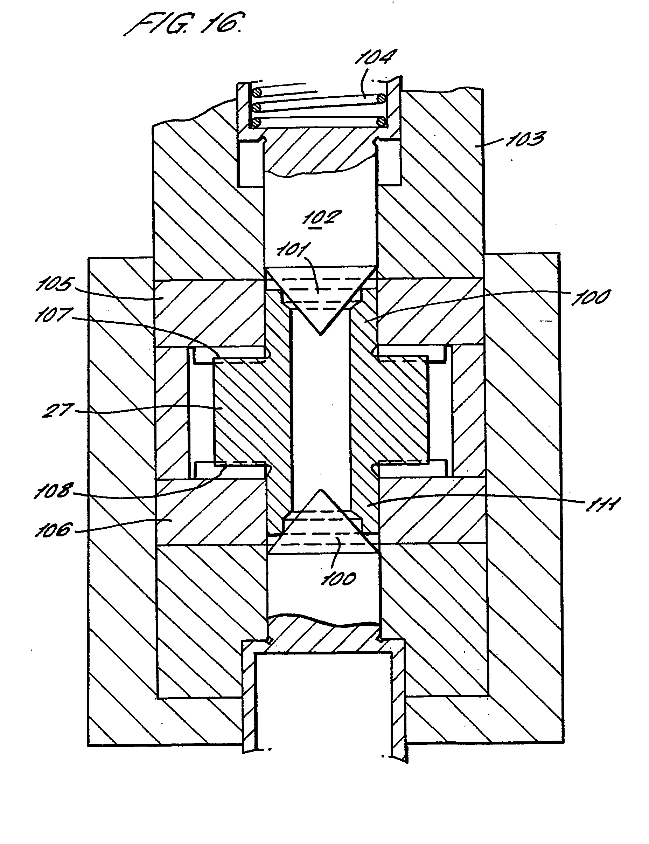

Figure 11 shows that the hydraulic rams 60,61 are first used to apply equal and opposite pressure to deform the components 10,20 so that inward facing surfaces thereof engage faces of the die blade 56 and deform to a shape and spacing defined by the die blade 56. Then the hydraulic rams 51,52 are used to apply equal and opposite pressure on the components 10,20. The material of the components 10,20 is deformed so that the spigots e.g. 11,12 of one component e.g 10 are forced into the matching apertures of the other component e.g 20. This is best shown in figure 10. The material in the vicinity of the die spigot 62 deforms to take the shape of and be defined by the spigot 62 and thereby form journal pads for the rotating nut. This process gives a very good level of tolerance to the journal pads. The planar end surfaces are also deformed to take the shape of the facing ram surfaces and acquire a high dimensional tolerance in the process and a better surface finish and surface hardness. The contact areas between the rams 51,52 and the components 10,20 must be carefully proportioned to allow for local distortion of the planar faces 70,71,72 and 73 (see figure 12) whilst allowing full deformation and material flow in the formation of the journal pads.

One pair of hydraulic rams is used to apply pressure to the components 10,20 and then the other pair is used to apply pressure in a repeated manner, switching between the pairs of rams repeatedly over several cycles.

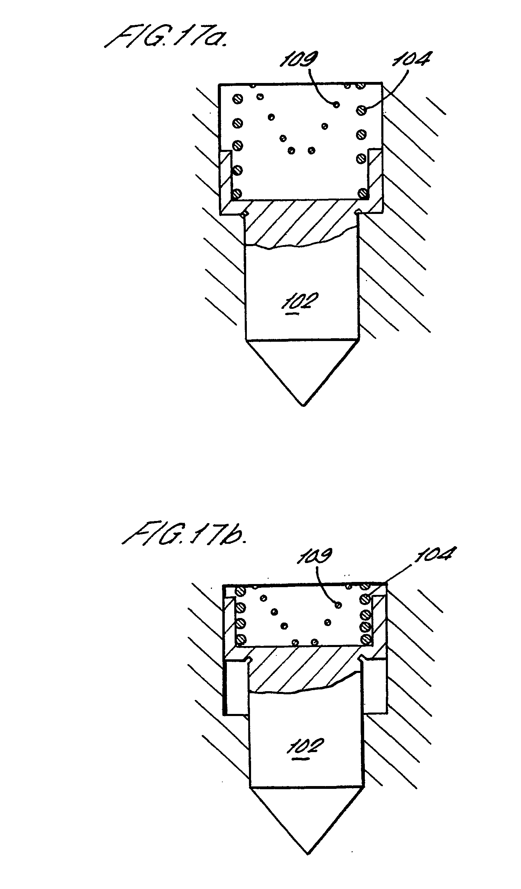

Figure 13 illustrates a next stage in the procedure. In this stage the ram 60 is retracted away from the components 10,20. A further small ram 80 is slidable in the bore in the ram 60 which receives the end of the die spigot 62. The further ram 80 and the die spigot 62 both have concave end surfaces. A carbide ball 81 is raised from a ball store into alignment with the ram 80 and the spigot 62 and then engaged by them. The carbide ball 81 has a diameter marginally greater than the diameter of the apertures 21,22 (but less than the diameter of the aperture 57). The ball 81 is forced through the apertures 21,22 by the hydraulic ram 80. The carbide ball 81 burnishes the journal pads provided by the peripheral surfaces of the apertures 21,22 giving the surfaces an improved finish and an improved hardness. Once it has passed through the apertures 21,22 then the ball 82 is released and drops back down into the ball store.

Figure 14 illustrates the penultimate stage in the procedure in which the ram 52 is retracted from engagement with the components 10,20. A ram 90 is slidable in the bore in the ram 52 which receives the die spigot 53. The ends of both the ram 90 and the die spigot 53 are concave. A carbide ball 91 is raised from a ball store into alignment with the ram 90 and the die spigot 53. The ram 90 is advanced to trap the carbide ball 91 between the ram 91 and the die spigot 53. The ram 90 is then further advanced (with the die spigot 53 simultaneously retracted) so that the ball 91 is forced through the apertures 23,25. The ball has a diameter marginally greater than the diameter of the apertures 23,25. The carbide ball burnishes the bearing surfaces of the apertures to improve the surface finish and the surface hardness.

Finally, as shown in figure 15, the hydraulic rams 51,52 and 60,61 are all withdrawn and the components 10,20 forcibly separated. At this stage the components are suitable for use as the two halves of the casing of the gearbox. The alignment of the apertures 23,25 has been assured by the deformation of metal onto the die spigot 53. The diameters of the apertures 23,25 are assured to a very close tolerance. The inner surfaces of the apertures are burnished to high degree of surface finish and thus provide good bearing surfaces to receive the ends of the worm gear 24. The spacing between the two inner surfaces of the casing which act as the thrust surfaces for rotating nut 27 is assured to a high tolerance by the deformation of the surfaces against the die blade 56. The diameters of the apertures 21,22 are defined to close tolerances by the deformation of material against the die spigot 62. The inner surfaces of the apertures 21,22 are burnished and have a good surface finish and surface hardness and thus make good journal pads for the ends of the rotating nut 27.

The worm gear 24 and the rotating nut are placed between the two deformed components 10,29 along with a suitable grease and the components are then secured together with the spigots of each engaging in the apertures in the other.

The good dimensional tolerances of and the good surface finishes of the casing parts enable the construction of a seven piece gearbox. The gearbox is a reduction gearbox stepping down a rotational speed of e.g. 3200 rpm of an electric motor to a lower speed of revolution of the lead screw.

The deformation of the material of the components 10,20 is plastic deformation. However, during the forming process various components such as the ram surfaces, the die spigots and the blade spigot will deform elastically. This elastic deformation must be taken into account in creating these components to ensure that accuracy in the dimensions of the finished parts is achieved.

The process described above is conducted without application of heat to the components 10,20 and is essentially a cold deformation process. Internal stresses can build up in the components 10,20. To avoid these stresses leading to fatigue problems in the finished product it may be desirable to anneal the components.

Whilst above the process is conducted on cast components, the process is also suitable for use to finish components initially made from wrought metal.

Figure 16 shows apparatus for forming a rotatable nut 27 suitable for use in the gearbox described above. The nut 27 is formed by first machining a steel blank to form a component having a cylindrical shaft with an integral gear wheel extending radially from a midpoint of the shaft. External teeth are rolled on to the peripheral surface of the gear wheel. A bore is machined through the cylindrical shaft and tapped and case hardened. Alternatively and preferably, the internal thread in the bore through the shaft is flow formed. The gear wheel has a pair of generally planar side surfaces which are provided with radially extending indentations.

The machined blank is next sandwiched between a pair of steel or bronze washers 107,108 and the assembly of blank and washers is located on a conical end stop 100 which protrudes into the axial passage passing through the component 27. A second conical end stop 101 is provided on a sprung member 102 slidably mounted in a ram 103. The sprung member is biassed forwardly of the ram by a spring 104. As the ram 103 is advanced the conical end stop 101 engages the component 27 by engaging in an aperture in an end surface opening on to the inner passage therethrough. The two conical end stops 100 and 101 act to centre the component 27 precisely in place in the machine tool.

The hydraulic ram 103 continues to advance, with the sprung member 102 retracting into the ram 103 against the biassing force of the spring 104. Eventually a tool 105 mounted on the ram 103 engages the washer 107 and a tool 106 engages the other washer 108. The tools 105,106 cause local deformation of the material of the washers 107,108 the material of which flows into the indentations on the planar side surfaces of the gear wheel of the component. The washers 107,108 are thus fixed to the component 27.

In a modification of the figure 16 apparatus is shown in figures 17a and 17b. In the modification both of the conical end stops 100 and 101 are mounted on sprung biassed slidable members in an identical fashion, although for simplicity only the member 102 is illustrated. In figure 17a it can be seen that in addition to the biassing spring 104 there is provided a cup spring 109. For the initial movement of the member 102 relative to the ram 103 the cup spring 109 does not impinge on the member 102. However, the cup spring 109 doe come into play for the last part of the motion of the member 102. The cup spring 102 will be a stiff spring. Under the influence of cup spring both of the conical end stops 100,101 will apply radially outward forces on the skirts 110 and 111 of the rotating nut 27. These forces will cause the material of the skirts to expand radially so that the exterior diameter of the skirts is set exactly to the diameter of bores in the tools 105 and 106.

By using the apparatus of figures 16,17a and 17b the rotating nut 27 can be provided with thrust washers 107,108 which provide surfaces engageable with reaction surfaces of the gearbox casing, the washers being composed of a material with good frictional and wear characteristics.

## Claims

1. A method of manufacture of metallic components comprising:
casting first and second metallic components (10,20) each with a chosen shape and configuration;
bringing the first and second metallic cast components (10,20) into abutment with each other with the abutting components providing a first pair of aligned apertures;
**characterised by**:
inserting a first inner die tool (56) through both of the first pair of aligned apertures;
using exterior die tools to apply pressure, in the absence of external heating, on an external surface of each of the pair of cast components (10,20) in order to deform the metal of the components and in order to simultaneously force a first interior surface part of each component against the previously inserted first inner die tool (56), whereby when the first and second components (10,20) are deformed the shape and configuration of each first interior surface is set by the first inner die tool (56); and
withdrawing the first inner die tool (56) after the application of pressure has ceased.

2. A method as claimed in claim 1 wherein:
the cast components (10,20) when brought together provide a second pair of aligned apertures (21,22) in the components;
the first inner die tool (56) has an aperture (57) therethrough which aligns with the second pair of aligned apertures (21,22) when the first inner die tool (56) has been inserted through both of the first pair of aligned apertures;
a second inner die tool (62) is inserted through one of the second pair of aligned apertures (21), through the aperture (57) in the first inner die tool (56) and then through the other of the second pair of aligned apertures (22);
when pressure is applied to the external surface (70,71,72,73) of each of the cast components, a second interior surface part of each component is forced against the second die tool (62); and
the second inner die tool (62) is withdrawn after the application of pressure has ceased and before the withdrawing of the first inner die tool (56).

3. A method as claimed in claim 2 wherein:
a first pair of aligned rams (60,61) are used to apply pressure via a first pair of external die tools on first parts of the external surfaces of the cast components in order to force the first interior surface parts against the first inner die tool (56);
a second pair of aligned rams (51,52), unaligned with the rams (60,61) of the first pair, are used to apply pressure via a second pair of external die tools (55,58) on second parts of the external surfaces (70,71,72,73) of the cast components, the second external surface parts (70,71,72,73) being spaced from the first external surface parts, the second pair of aligned rams (51,52) being used to force the second interior parts of the interior surfaces of the cast components against the second inner die tool (62); and
the first and second pairs of rams (51,52,60,61) are used sequentially with one pair of rams applying pressure for a first time period and the other set of rams applying pressure for a second later time period.

4. A method as claimed in claim 2 or claim 3 wherein the first pair of aligned apertures are aligned along a first axis and the second pair of aligned apertures (21,22) are aligned along a second axis perpendicular to the first axis.

5. A method as claimed in any one of claims 2 to 4
wherein:
the cast components (10,20) when brought together provide a third pair of aligned apertures(23,25);
a third inner die tool (53) is inserted through both of the third pair of aligned apertures (23,25); and
pressure is applied to the exterior surfaces of the cast components to deform the metal of the components (10,20) and to force third interior surface parts of the components against the third inner die tool (53); and
the third inner die tool (53) is withdrawn after the application of pressure has ceased.

6. A method as claimed in claim 5 wherein the third inner die tool (53) is a cylindrical spigot and the third interior surface parts are peripheral surfaces defining the third pair of aligned apertures (23,25) and the apertures of the third aligned pair (23,25) are circular in cross-section.

7. A method as claimed in any one of claims 2 to 6
wherein the second inner die tool (62) is a cylindrical spigot and the second interior surface parts are peripheral surfaces defining the second aligned pair of apertures (21,22) and the apertures of the second aligned pair (21,22) are circular in cross-section.

8. A method as claimed in any one of claims 1 to 7
wherein the first inner die tool (56) is a die blade having a pair of spaced apart flat side surfaces and the first interior surface parts of the cast components are forced against the flat side surfaces of the die blade (56) in order to set accurately a spacing between the first interior surface parts during deformation of the metal of the components (10,20).

9. A method as claimed in any one of claims 1 to 8
wherein:
after deformation of the metal of the cast components (10,20) by forcing of interior surfaces against one or more inner die tools (52,53,62), a ball (81,91) is forced through at least one pair of aligned apertures (21,22,23,25), the ball (81,91) having a diameter marginally greater than the diameter of the aligned apertures (21,22,23,25) and the ball (81,91) burnishing the peripheral surfaces defining the apertures (21,22,23,25).

10. A gearbox (30) comprising a casing made from metal components cast;
**characterised by**:
then being deformed in the manner claimed in any one of claims 1 to 9.

11. A gearbox (30)comprising a casing formed of metal components cast then deformed in the manner claimed in claim 5, the gearbox (30) comprising a worm gear (24) journalled in the third pair of aligned apertures (23,25) which meshes with a rotating nut (21,22) journalled in the second pair of aligned apertures.

12. Apparatus used in the manufacture of metallic components by a method as claimed in claim 5, the apparatus comprising:
a first pair of aligned rams (51,52), one of which has extending forwardly from a front face thereof a cylindrical die spigot (53) and a die blade (56) and the other of which has a bore (54)and a slot in a front face thereof (55) to receive respectively the die spigot (53) and the die blade (56); and
a second pair of aligned rams (60,61), one of which has extending forwardly thereof a cylindrical die spigot (62) and the other of which has a bore in a front face thereof to receive the die spigot (62); wherein
the first pair of aligned rams (51,52) are not aligned with the second pair of aligned rams (60,61); and
the die blade (56) has an aperture (57) through which the cylindrical die spigot (62) of the ram (61) of the second pair of rams can extend in use of the apparatus.

13. A method of finishing first and second cast metallic components (10,20) which in a finished product are attached to one another, the method being conducted prior to the attachment together of the components to form the finished product and the method comprising the steps of:
bringing together the first and second cast metallic components (10,20), each component having been previously cast with a desired shape and configuration, with the first and second metallic components (10,20) providing a first pair of aligned apertures and a second pair of aligned apertures (21,22);
**characterised by**:
inserting a first inner die spigot (56) through the first pair of aligned apertures;
inserting a second inner die spigot (62) through the second pair of aligned apertures (21,22); and
in the absence of external heating, using a ram (51,52,60,61) to apply via external die tools (55,58) a force on an external surface of each of the first and second components (10,20) to deform the metal of the components whilst the previously inserted first inner die spigot (56) ensures that the apertures of the first pair of aligned apertures remain aligned and the previously inserted second inner die spigot (62) ensures that the apertures of the second pair of aligned apertures (21,22) remain aligned;
withdrawing the inner die spigots after deformation of the metal has ceased; and
separating the first and second components (10,20) to be attached to each other later in the assembly of the finished product.

14. A gearbox (30) having a casing comprising first and second metallic components (10,20) finished by the method of claim 13.

## Patentansprüche

1. Verfahren zur Herstellung von metallischen Bauteilen umfassend:
Gießen eines ersten und zweiten metallischen Bauteiles (10,20), wobei jeder Bauteil eine ausgewählte Form und Konfiguration aufweist;
Aneinanderstoßen des ersten und zweiten metallischen Gussbauteils (10,20) mit den Stoßbauteilen, wodurch ein erstes Paar ausgerichteter Öffnungen hergestellt wird;
**dadurch gekennzeichnet;**
**dass** ein erstes inneres Gusswerkzeug (56) durch beide Öffnungen des ersten Paares ausgerichteter Öffnungen eingeführt wird;
**dass** ein äußeres Gusswerkzeug zur Anwendung von Druck, mangels externer Erhitzung, auf einer Außenfläche jedes Gussbauteilpaares (10,20) zur Verformung des Metalls der Bauteile und zur gleichzeitigen Forcierung eines ersten Teiles der Innenfläche jedes Bauteiles gegen das zuvor eingeführte innere Gusswerkzeug (56) verwendet wird und bei der Verformung des ersten und zweiten Bauteiles (10,20) die Form und Konfiguration jeder ersten Innenfläche vom ersten inneren Gusswerkzeug (56) bestimmt wird; und
**dass** das erste innere Gusswerkzeug (54) nach Beendigung der Druckanwendung zurückgezogen wird.

2. Verfahren nach Anspruch 1 wobei:
die Gussbauteile (10,20), wenn sie vereint werden, ein zweites Paar ausgerichteter Öffnungen (21, 22) in den Bauteilen erzeugen;
das erste innere Gusswerkzeug (56) eine Öffnung (57) aufweist, die mit dem zweiten Paar ausgerichteter Öffnungen (21, 22) ausgerichtet ist, wenn das erste innere Gusswerkzeug (56) durch jede Öffnung der beiden ersten ausgerichteten Öffnungen (22) eingeführt wurde;
ein zweites inneres Werkzeug (62) durch eines des zweiten Paares ausgerichteten Öffnungen (21), durch die Öffnung (57) in das erste innere Gusswerkzeug (56) und dann durch das andere des zweiten Paares ausgerichteter Öffnungen eingeführt wird;
wenn Druck auf der Außenfläche (70, 71, 72, 73) der einzelnen gegossenen Bauteile angewandt wird, eine zweite Innenfläche jedes Bauteiles gegen das zweite Gusswerkzeug (62) forciert wird; und
das zweite innere Werkzeug (62) nach Anwendung des Druckes und vor Zurückziehen des ersten inneren Werkzeuges (56) zurückgezogen wird.

3. Verfahren nach Anspruch 2 wobei:
ein erstes Paar ausgerichteter Stößel (60, 61) zur Anwendung von Druck über ein erstes Paar von äußeren Gusswerkzeugen auf erste Teile der Außenflächen der Gussbauteile zur Forcierung der ersten Teile der Innenfläche gegen das innere Gusswerkzeug (56) verwendet wird;
ein zweites Paar ausgerichteter Stößel (51, 52), das nicht mit den Stößeln (60, 61) des ersten Paares ausgerichtet ist, zur Anwendung von Druck über ein zweites Paar von äußeren Gusswerkzeugen (55, 58) auf zweite Teile der Außenflächen (70, 71, 72, 73) der Gussbauteile angewandt wird, wobei die zweiten Teile der Außenfläche (70, 71, 72, 73) von den ersten Teilen der Außenfläche distanziert sind und das zweite Paar ausgerichteter Stößel (51, 52) zum Forcieren der zweiten Teile der Innenflächen der Gussbauteile gegen das zweite innere Gusswerkzeug (62) verwendet wird; und
das erste und zweite Paar Stößel (51, 52, 60, 61) nacheinander mit einem Paar Stößel, das auf eine erste Zeitspanne Druck anwendet und das andere Stößelpaar Druck auf eine zweite Zeitspanne anwendet, verwendet wird.

4. Verfahren nach Anspruch 2 oder 3, wobei das erste Paar ausgerichteter Öffnungen längs einer ersten Achse und das zweite Paar ausgerichteter Öffnungen (21, 22) längs einer zweiten Achse, die senkrecht zur ersten steht, ausgerichtet ist.

5. Verfahren nach einem der Ansprüche 2 bis 4, wobei:
die Gussbauteile (10, 20), bei Vereinigung ein drittes Paar ausgerichteter Öffnungen (23, 25) ergeben;
ein drittes inneres Gusswerkzeug (53) durch beide Öffnungen des dritten Paares ausgerichteter Öffnungen (23, 25) eingeführt wird; und
Druck auf die Außenfläche der Gussbauteile zur Verformung des Metalls der Bauteile (10, 20) und zur Forcierung von Teilen der dritten Innenfläche gegen das dritte innere Gusswerkzeug (53) ausgeübt wird; und
das dritte innere Gusswerkzeug (53) nach Beendigung der Druckausübung zurückgezogen wird.

6. Verfahren nach Anspruch 5, wobei das dritte innere Gusswerkzeug (53) ein zylindrischer Zapfen und die Teile der dritten Innenfläche periphere Flächen sind, die das dritte Paar ausgerichteter Öffnungen (23,25) bestimmen und die Öffnungen des dritten ausgerichteten Paares (23, 25) im Querschnitt rund sind.

7. Verfahren nach einem der Ansprüche 2 bis 6, wobei das zweite innere Gusswerkzeug (62) ein zylindrischer Zapfen ist und die Teile der zweiten Innenfläche periphere Flächen sind, die das zweite ausgerichtete Paar Öffnungen (21, 22) bestimmen und die Öffnungen des zweiten ausgerichteten Paares (21, 22) im Querschnitt rund sind.

8. Verfahren nach einem der Ansprüche 1 bis 7, wobei das erste innere Gusswerkzeug (56) ein Gussblatt ist, das ein Paar voneinander distanzierter Seitenflächen aufweist und die Teile der ersten Innenfläche der Gussbauteile gegen die flachen Seitenflächen des Gussblattes (56) forciert werden, um genau einen Abstand zwischen den Teilen der ersten Innenfläche während der Verformung des Metalls der Bauteile (10, 20) zu bestimmen.

9. Verfahren nach einem der Ansprüche 1 bis 8, wobei:
nach der Verformung des Metalls der Gussbauteile (10, 20) durch Forcieren der Innenflächen gegen ein oder mehrere Gusswerkzeuge (52, 54, 62), eine Kugel (81,91) durch mindestens ein Paar der ausgerichteten Öffnungen (21,22,23,25) forciert wird und die Kugel (81,91) einen Durchmesser aufweist, der etwas größer als der Durchmesser der ausgerichteten Öffnungen (21,22,23,25)
ist und die Kugel (81,91) die peripheren Flächen, die die Öffnungen (21,22,23,25) bestimmen, poliert.

10. Getriebe (30) umfassend ein Gehäuse aus metallischen Bauteilen;
**dadurch gekennzeichnet:**
**dass** es dann nach einem der Ansprüche 1 bis 9 verformt wird.

11. Getriebe (30), das ein Gehäuse, bestehend aus metallischen Bauteilen, die dann nach Anspruch 5 verformt werden, umfasst, und das Getriebe, ein Schneckengetriebe (24) enthält, das im dritten Paar ausgerichteter Öffnungen (23,25) gelagert ist, das in eine drehende Nut (21,22) eingreift, die im zweiten Paar ausgerichteter Öffnungen, gelagert ist.

12. Vorrichtung, die zur Herstellung von metallischen Bauteilen nach einem Verfahren nach Anspruch 5 verwendet wird und die Vorrichtung Folgendes umfasst:
ein erstes Paar ausgerichteter Stößel (51,52), wovon einer einen zylindrischen Gusszapfen (53) und ein Gussblatt (56), die sich von der vorderen Fläche nach vorne verlängert und das andere eine Bohrung (54) und einen Schlitz auf einer Vorderfläche (55) zur Aufnahme des Gusszapfen (53) bzw. des Gussblattes (56) aufweist; und
ein zweites Paar ausgerichteter Stößel (60, 61), wovon einer einen zylindrischen Gesenkzapfen (62) und das andere eine Bohrung in einer Vorderfläche (55) davon zur Aufnahme des Gusszapfens (62) aufweist; wobei
das erste Paar ausgerichteter Stößel (51,52) nicht mit dem zweiten Paar ausgerichteter Stößel (60,61) ausgerichtet ist; und
das Gussblatt (56) eine Öffnung (57) aufweist durch die sich der zylindrische Gusszapfen (62) des Stößels (61) des zweiten Stößelpaares bei Verwendung der Vorrichtung verlängern kann.

13. Verfahren zur Nachbearbeitung des ersten und zweiten metallischen Gussbauteiles (10,20), die in einem Fertigprodukt miteinander vereint werden, wobei das Verfahren vor der Vereinigung der Bauteile zum Erhalt des fertigen Produktes ausgeführt wird, und das Verfahren folgende Phasen umfasst:
Vereinigung des ersten und zweiten metallischen Gussbauteiles (10,20), wobei jeder Bauteil zuvor mit einer gewünschten Form und Konfiguration gegossen wurde, und der erste und zweite metallische Gussbauteil (10,20) ein erstes Paar ausgerichteter Öffnungen und eine zweites Paar ausgerichteter Öffnungen (21,22) bilden;
**dadurch gekennzeichnet, dass**
ein erster innerer Gusszapfen (56) durch das erste Paar ausgerichteter Öffnungen eingeführt wird;
ein zweiter innerer Gusszapfen (62) durch das zweite Paar ausgerichteter Öffnungen (21,22) eingeführt wird; und
mangels externer Erhitzung, ein Stößel (51,52,60,61) zur Anwendung einer Kraft auf eine externe Fläche des ersten und zweiten Bauteiles (10,20) über externe Gusswerkzeuge (55,58), zur Verformung des Metalls der Bauteile verwendet wird, während der zuvor eingeführte erste innere Gusszapfen (56) sicherstellt, dass die Öffnungen des ersten Paares ausgerichteter Öffnungen ausgerichtet bleibt und der zuvor eingeführte zweite innere Gusszapfen (62) sicherstellt, dass die Öffnungen des zweiten Paares innerer ausgerichteter Öffnungen (21,22) ausgerichtet bleibt:
der innere Gusszapfen nach der Verformung des Metalls zurückgezogen wird; und
der erste und zweite Bauteil (10,20) getrennt werden, um später beim Zusammenbau des fertigen Produktes vereint zu werden.

14. Getriebe (30), das eine Gehäuse besitzt, das einen ersten und zweiten Bauteil (10,20), die mit dem Verfahren nach Anspruch 13 endbearbeitet werden, umfasst.

## Revendications

1. Procédé de fabrication de composants métalliques comprenant les étapes consistant à :
couler des premier et second composants métalliques (10, 20), chacun avec une forme et une configuration choisies ;
amener les premier et second composants métalliques coulés (10, 20) en butée l'un contre l'autre avec les composants de butée fournissant une première paire d'ouvertures alignées ;
**caractérisé par** :
l'insertion d'un premier outil de matrice interne (56) à travers les deux ouvertures de la première paire d'ouvertures alignées ;
l'utilisation d'outils de matrice extérieure pour appliquer une pression, en l'absence de chauffage externe, sur une surface externe de chaque composant de la paire de composants moulés (10, 20) afin de déformer le métal des composants et afin de forcer simultanément une première partie de surface intérieure de chaque composant contre le premier outil de matrice
interne (56) préalablement inséré, moyennant quoi, lorsque les premier et second composants (10, 20) sont déformés, la forme et la configuration de chaque première surface intérieure sont fixées par le premier outil de matrice interne (56) ; et
le retrait du premier outil de matrice interne (56) après que l'application de pression a cessé.

2. Procédé selon la revendication 1 dans lequel :
les composants coulés (10, 20) lorsqu'ils sont amenés ensemble fournissent une deuxième paire d'ouvertures alignées (21, 22) dans les composants ;
le premier outil de matrice interne (56) comporte une ouverture (57) dans celui-ci qui s'aligne avec la deuxième paire d'ouvertures alignées (21, 22) lorsque le premier outil de matrice interne (56) a été inséré à travers les deux ouvertures de la première paire d'ouvertures alignées ;
un deuxième outil de matrice interne (62) est inséré à travers une ouverture de la deuxième paire d'ouvertures alignées (21), à travers l'ouverture (57) dans le premier outil de matrice interne (56) et ensuite à travers l'autre ouverture de la deuxième paire d'ouvertures alignées (22) ;
lorsque la pression est appliquée à la surface externe (70, 71, 72, 73) de chacun des composants coulés, une seconde partie de surface intérieure de chaque composant est forcée contre le deuxième outil de matrice (62) ; et
le deuxième outil de matrice interne (62) est retiré après que l'application de la pression a cessé et avant le retrait du premier outil de matrice interne (56).

3. Procédé selon la revendication 2 dans lequel :
une première paire de pistons alignés (60, 61) est utilisée pour appliquer une pression par le biais d'une première paire d'outils de matrice externe sur des premières parties des surfaces externes des composants coulés afin de forcer les premières parties de surface intérieure contre le premier outil de matrice interne (56) ;
une seconde paire de pistons alignés (51, 52), non alignée les pistons (60, 61) de la première paire, est utilisée pour appliquer une pression par le biais d'une seconde paire d'outils de matrice externe (55, 58) sur des secondes parties des surfaces externes (70, 71, 72, 73) des composants coulés, les secondes parties de surfaces externes (70, 71, 72, 73) étant espacées des premières parties de surface externe, la seconde paire de pistons alignés (51, 52) étant utilisée pour forcer les secondes parties intérieures des surfaces intérieures des composants coulés contre le deuxième outil de matrice interne (62) ; et
les première et seconde paires de pistons (51, 52, 60, 61) sont utilisées l'une après l'autre avec une paire de pistons appliquant une pression pendant une première période de temps et l'autre groupe de pistons appliquant une pression pendant une seconde période de temps ultérieure.

4. Procédé selon la revendication 2 ou la revendication 3, dans lequel la première paire d'ouvertures alignées est alignée le long d'un premier axe et la deuxième paire d'ouvertures alignées (21, 22) est alignée le long d'un second axe perpendiculaire au premier axe.

5. Procédé selon l'une quelconque des revendications 2 à 4, dans lequel :
les composants coulés (10, 20) lorsqu'ils sont amenés ensemble fournissent une troisième paire d'ouvertures alignées (23, 25) ;
un troisième outil de matrice interne (53) est inséré à travers les deux ouvertures de la troisième paire d'ouvertures alignées (23, 25) ; et
une pression est appliquée aux surfaces extérieures des composants coulés afin de déformer le métal des composants (10, 20) et de forcer les troisièmes parties de surface intérieure des composants contre le troisième outil de matrice interne (53) ; et
le troisième outil de matrice interne (53) est retiré après que l'application de pression a cessé.

6. Procédé selon la revendication 5, dans lequel le troisième outil de matrice interne (53) est un centrage cylindrique et les troisièmes parties de surface intérieure sont des surfaces périphériques définissant la troisième paire d'ouvertures alignées (23, 25) et les ouvertures de la troisième paire alignée (23, 25) sont circulaires en coupe transversale.

7. Procédé selon l'une quelconque des revendications 2 à 6, dans lequel le deuxième outil de matrice interne (62) est un centrage cylindrique et les deuxièmes parties de surface intérieure sont des surfaces périphériques définissant la deuxième paire d'ouvertures alignées (21, 22) et les ouvertures de la seconde paire alignée (21, 22) sont circulaires en coupe transversale.

8. Procédé selon l'une quelconque des revendications 1 à 7, dans lequel le premier outil de matrice interne (56) est une lame de matrice ayant une paire de surfaces latérales plates espacées et les premières parties de surface intérieure des composants coulés sont forcées contre les surfaces latérales plates de la lame de matrice (56) afin de fixer de manière précise un espacement entre les premières parties de surface intérieure au cours de la déformation du métal des composants (10, 20).

9. Procédé selon l'une quelconque des revendications 1 à 8, dans lequel :
après la déformation du métal des composants coulés (10, 20) en forçant les surfaces intérieures contre un ou plusieurs outils de matrice interne (52, 53, 62), une bille (81, 91) est forcée à travers au moins une paire d'ouvertures alignées (21, 22, 23, 25), la bille (81, 91) ayant un diamètre marginalement supérieur au diamètre des ouvertures alignées (21, 22, 23, 25) et la bille (81, 91) brunissant les surfaces périphériques définissant les ouvertures (21, 22, 23, 25).

10. Boîte à engrenages (30) comprenant un boîtier composé de composants métalliques coulés ;
**caractérisée en ce :**
**qu'**ils sont ensuite déformés de la manière revendiquée dans l'une quelconque des revendications 1 à 9.

11. Boîte à engrenages (30) comprenant un boîtier formé de composants métalliques coulés puis déformés de la manière revendiquée dans la revendication 5, la boîte à engrenages (30) comprenant un engrenage à vis sans fin (24) appuyé dans la troisième paire d'ouvertures alignées (23, 25) qui s'engrène avec un écrou rotatif (21, 22) appuyé dans la deuxième paire d'ouvertures alignées.

12. Appareil utilisé dans la fabrication de composants métalliques par le procédé selon la revendication 5, l'appareil comprenant :
une première paire de pistons alignés (51, 52), dont l'une comporte, s'étendant vers l'avant depuis une face avant de celui-ci, un centrage de matrice cylindrique (53) et une lame de matrice (56) et dont l'autre comporte un alésage (54) et une fente (55) dans une face avant de celui-ci destinés à recevoir respectivement le centrage de matrice (53) et la lame de matrice (56) ; et
une seconde paire de pistons alignés (60, 61), dont l'une comporte, s'étendant vers l'avant depuis une face avant de celui-ci, un centrage de matrice cylindrique (62), et l'autre comporte un alésage dans une face avant de celui-ci destiné à recevoir le centrage de matrice (62) ; dans lequel
la première paire de pistons alignés (51,52) n'est pas alignée avec la seconde paire de pistons alignés (60,61) ; et
la lame de matrice (56) comporte une ouverture (57) à travers laquelle le centrage de matrice cylindrique (62) du piston (61) de la seconde paire de pistons peut s'étendre lors de l'utilisation de l'appareil.

13. Procédé de finition de premier et second composants métalliques coulés (10, 20) qui, dans un produit fini, sont fixés l'un à l'autre, le procédé étant réalisé préalablement à la fixation l'un à l'autre des composants afin de former le produit fini et le procédé comprenant les étapes consistant à :
amener ensemble les premier et second composants métalliques coulés (10, 20), chaque composant ayant été préalablement coulé en une forme et une configuration souhaitées, les premier et second composants métalliques (10, 20) fournissant une première paire d'ouvertures alignées et une deuxième paire d'ouvertures alignées (21, 22) ;
**caractérisé par** :
l'insertion d'un premier centrage de matrice interne (56) à travers la première paire d'ouvertures alignées ;
l'insertion d'un second centrage de matrice interne (62) à travers la deuxième paire d'ouvertures alignées (21, 22) ; et
en l'absence de chauffage externe, l'utilisation d'un piston (51, 52, 60, 61) pour appliquer par le biais d'outils de matrice externe (55, 58) une force sur une surface externe de chacun des premier et second composants (10, 20) afin de déformer le métal des composants tandis que le premier centrage de matrice interne (56) préalablement inséré assure que les ouvertures de la première paire d'ouvertures alignées restent alignées et le second centrage de matrice interne (62) préalablement inséré assure que les ouvertures de la deuxième paire d'ouvertures alignées (21, 22) restent alignées ;
le retrait des centrages de matrice interne après que la déformation du métal a cessé ; et
la séparation des premier et second composants (10, 20) à fixer l'un à l'autre plus tard lors de l'assemblage du produit fini.

14. Boîte à engrenages (30) ayant un boîtier comprenant des premier et second composants métalliques (10, 20) finis par le procédé de la revendication 13.
